# EUROPEAN PATENT APPLICATION

(11) **EP 4 333 487 A1**
(43) Date of publication of application: **06.03.2024**
(21) Application number: 22810587.0
(22) Date of filing: 25.05.2022
(51) Int. Cl.: H04W 24/02

(54) **POLICY GENERATION METHOD AND APPARATUS, TERMINAL, DEVICE, AND SESSION MANAGEMENT UNIT**

(30) Priority: 26.05.2021 CN 202110580756
(71) Applicant: Vivo Mobile Communication Co., Ltd., Dongguan, Guangdong 523863 (CN)
(72) Inventor: ZHANG, Pengfei, Dongguan, Guangdong 523863 (CN); KANG, Yanchao, Dongguan, Guangdong 523863 (CN); HAN, Lufeng, Dongguan, Guangdong 523863 (CN)
(74) Representative: Murgitroyd & Company
(86) International application number: PCT/CN2022/095012
(87) International publication number: WO 2022/247863

(57) **Abstract**

This application discloses a policy generation method and apparatus, a terminal, a device, and a session management unit. The policy generation method in the embodiment of this application includes: during a process of establishing or modifying a data tunnel, generating, by a first device, a session management policy, where the session management policy includes computing power information; and sending, by the first device, the session management policy.

## Description

### CROSS-REFERENCE TO RELATED APPLICATION

This application claims priority to Chinese Patent Application No. 202110580756.8, filed on May 26, 2021 in China, which is incorporated herein by reference in its entirety.

### TECHNICAL FIELD

This application belongs to the technical field of communication, and specifically relates to a policy generation method and apparatus, a terminal, a device, and a session management unit.

### BACKGROUND

Quality of service (Quality of Service, QoS) refers to that a network uses various underlying technologies to provide better service capabilities for designated network communications, to solve problems such as network delay and congestion to achieve a transmission capacity guarantee mechanism required by a specific service. When network congestion occurs, all data streams may be discarded. To meet user requirements for different quality of service of different applications, it is necessary for the network to allocate and schedule resources according to user requirements, and provide different quality of service for different data streams (for example, preferentially process real-time and important data packets), and ordinary data packets with low real-time performance are processed less preferentially and even discarded when the network is congested.

However, current cloud computing cannot provide computing power-related service guarantees for terminals or services, thus failing to provide better services for UEs.

### SUMMARY

Embodiments of this application provide a policy generation method and apparatus, a terminal, a device, and a session management unit, which can solve the problem that current cloud computing cannot provide computing power-related service guarantees for terminals or services.

According to a first aspect, a policy generation method is provided, including: during a process of establishing or modifying a data tunnel, generating, by a first device, a session management policy, where the session management policy includes computing power information; and sending, by the first device, the session management policy.

According to a second aspect, a policy generation method is provided, including: during a process of establishing or modifying a data tunnel, receiving, by a terminal, a session management policy; where the session management policy is a session management policy applied to the terminal; and the session management policy includes computing power information.

According to a third aspect, a policy generation method is provided, including: during a process of establishing or modifying a data tunnel, sending, by a session management unit, a session policy generation request to a first device; where the session policy generation request is used to generate a session management policy applied to a terminal; receiving, by the session management unit, the session management policy sent by the first device; and sending, by the session management unit, the session management policy to the terminal, where the session management policy includes computing power information.

According to a fourth aspect, a policy generation apparatus is provided, including: a generation module, configured to generate a session management policy during a process of establishing or modifying a data tunnel, where the session management policy includes computing power information; and a sending module, configured to send the session management policy generated by the generation module.

According to a fifth aspect, a policy generation apparatus is provided, including: a receiving module, configured to receive a session management policy during a process of establishing or modifying a data tunnel; where the session management policy is a session management policy applied to the terminal; and the session management policy includes computing power information.

According to a sixth aspect, a policy generation apparatus is provided, including: a sending module, configured to send a session policy generation request to a first device during a process of establishing or modifying a data tunnel; where the session policy generation request is used to generate a session management policy applied to a terminal; and a receiving module, configured to receive the session management policy sent by the first device; and the sending module is further configured to send the session management policy to the terminal, where the session management policy includes computing power information.

According to a seventh aspect, a first device is provided. The first device includes a processor, a memory, and a program or an instruction stored in the memory and executable on the processor, where when the program or the instruction is executed by the processor, the steps of the method in the first aspect are implemented.

According to an eighth aspect, a first device is provided, including a processor and a communication interface, where the processor is configured to generate a session management policy during the process of establishing or modifying a data tunnel, where the session management policy includes computing power information, and the communication interface is configured to send the session management policy.

According to a ninth aspect, a terminal is provided. The terminal includes a processor, a memory, and a program or an instruction stored in the memory and executable on the processor, where when the processor or the instruction is executed by the processor, the steps of the method in the second aspect are implemented.

According to a tenth aspect, a terminal is provided, including a processor and a communication interface, where the communication interface is configured to receive a session management policy during a process of establishing or modifying a data tunnel; where the session management policy is a session management policy applied to the terminal; and the session management policy includes computing power information.

According to an eleventh aspect, a session management unit is provided, the session management unit includes a processor, a memory, and a program or an instruction stored in the memory and executable on the processor, and when the program or instruction is executed by the processor, the steps of the method in the third aspect are implemented.

According to a twelfth aspect, a session management unit is provided, including a processor and a communication interface, where the communication interface is configured to send a session policy generation request to a first device during a process of establishing or modifying a data tunnel; where the session policy generation request is used to generate a session management policy applied to a terminal; the communication interface is further configured to receive the session management policy sent by the first device; the communication interface is further configured to send the session management policy to the terminal, where the session management policy includes computing power information.

According to a thirteenth aspect, a readable storage medium is provided. The readable storage medium stores a program or an instruction, and when the program or the instruction is executed by a processor, the steps of the methods in the first aspect to the third aspect are implemented.

According to a fourteenth aspect, a chip is provided, the chip includes a processor and a communication interface, the communication interface is coupled to the processor, and the processor is configured to run programs or instructions, so as to implement the method according to the first aspect to the third aspect.

According to a fifteenth aspect, a computer program/program product is provided, the computer program/program product is stored in a non-volatile storage medium, and the program/program product is executed by at least one processor to implement the steps of the method in the first aspect to the third aspect.

In the embodiments of this application, during the process of establishing or modifying the data tunnel, the first device generates the session management policy including computing power information, and then configures the session management policy to other devices in the mobile communication network. In this way, by adding a service guarantee system related to computing power in the mobile communication network, the mobile communication network can provide better service quality guarantee for terminals or services and implement cloud-network integration.

### BRIEF DESCRIPTION OF DRAWINGS

FIG. 1 is a schematic diagram of a system architecture of a wireless communication system provided by an embodiment of this application;
FIG. 2 is a first method flowchart of a policy generation method provided by an embodiment of this application;
FIG. 3 is a second method flowchart of a policy generation method provided by an embodiment of this application;
FIG. 4 is a third method flowchart of a policy generation method provided by an embodiment of this application;
FIG. 5 is a first structural schematic diagram of a policy generation apparatus provided by an embodiment of this application;
FIG. 6 is a second structural schematic diagram of a policy generation apparatus provided by an embodiment of this application;
FIG. 7 is a third structural schematic diagram of a policy generation apparatus provided by an embodiment of this application;
FIG. 8 is a fourth structural schematic diagram of a policy generation apparatus provided by an embodiment of this application;
FIG. 9 is a fifth structural schematic diagram of a policy generation apparatus provided by an embodiment of this application;
FIG. 10 is a sixth structural schematic diagram of a policy generation apparatus provided by an embodiment of this application;
FIG. 11 is a schematic structural diagram of a communication device provided by an embodiment of this application;
FIG. 12 is a schematic diagram of a hardware structure of a terminal provided in an embodiment of this application; and
FIG. 13 is a schematic structural diagram of hardware of a network side device provided in an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that, the terms used in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the description and the claims, "and/or" represents at least one of connected objects, and a character "/" generally represents an "or" relationship between associated objects.

It should be noted that the technology described in the embodiments of this application is not limited to a Long Term Evolution (Long Term Evolution, LTE)/LTE-Advanced (LTE-Advanced, LTE-A) system, and may also be used in other wireless communications systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. The following descriptions describe a new radio (New Radio, NR) system for example purposes, and NR terms are used in most of the following descriptions, but these technologies can also be applied to an application other than an NR system application, for example, a 6th generation (6th Generation, 6G) communications system.

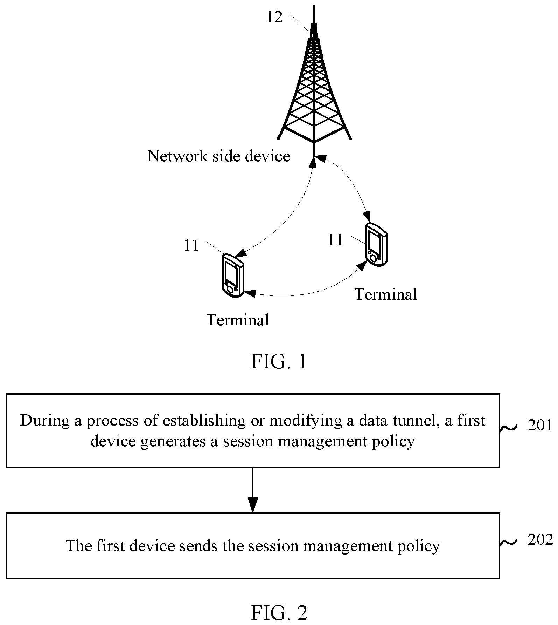

FIG. 1 is a block diagram of a wireless communication system to which embodiments of this application can be applied. The wireless communication system includes a terminal 11 and a network side device 12.

The terminal 11 may also be called a terminal device or user equipment (User Equipment, UE), and the terminal 11 may be a mobile phone, a tablet personal computer (Tablet Personal Computer), a laptop computer (Laptop Computer) or a notebook computer, a personal digital Assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or a vehicle-mounted device (VUE), a pedestrian terminal (PUE), and other terminal side devices. The wearable device includes: smart watches, bracelets, earphones, glasses, etc. It should be noted that a specific type of the terminal 11 is not limited in the embodiments of this application.

The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

It should be noted that the first device, the second device, the session management unit, the policy management unit, the wireless access unit, the data tunnel gateway, and the like in the embodiments of this application are all network side devices. It should be noted that the session management unit and the policy management unit in the embodiments of this application may be different functional modules in the first device, or may be different devices, which is not limited in the embodiments of this application.

In addition, the first device in the embodiments of this application may be an integrated network device integrating functions of various gateway units. For example, the first device may include at least one of the following functional units: a session management unit, a policy management unit, a wireless access unit, a data tunnel gateway, and the like.

The policy generation method provided by the embodiment of this application will be described in detail below through some embodiments and application scenarios with reference to the accompanying drawings.

The embodiments of this application provide a policy generation method, and as shown in FIG. 2, the policy generation method provided in the embodiments of this application includes the following steps:

Step 201: During a process of establishing or modifying a data tunnel, a first device generates a session management policy.

Step 202: The first device sends the session management policy.

In this embodiment of the application, the session management policy (for example, URSP) includes computing power information. It can be understood that the technical solution provided by the embodiment of this application is to extend the session management policy, so that the computing power information can be reflected in the session management policy.

Optionally, in this embodiment of this application, the computing power information includes at least one of the following: data type, algorithm information, computing amount, computing amount per unit time, computing time, computing type, and peak computing amount. Exemplarily, the data type may include at least one of the following: video, picture, voice, and the like.

Optionally, in this embodiment of this application, the session management policy includes a QoS parameter; where the computing power information is included in the QoS parameter.

It can be understood that in the embodiment of this application, the computing power information can be directly extended based on the QoS parameter. For example, the QoS parameter may include at least one of the following parameters:
a resource type (Resource type) (for example, a non-GBR (non-guaranteed bit rate), a GBR (guaranteed bit rate), and a delay-critical GBR (delay-critical guaranteed bit rate));
a priority level (priority level);
a packet delay budget (Packet Delay Budget) (including a core network packet delay budget (Core Network Packet Delay Budget));
a packet error rate (Packet Error Rate);
an averaging window (Averaging window) (for GBR and Delay-critical GBR resource type only);
a maximum data burst volume (Maximum Data Burst Volume) (for delay-critical GBR resource type only); and
   computing power information.

Further optionally, in the embodiment of this application, in a case that the session management policy includes a first identifier, a set of QoS parameters corresponding to the first identifier includes the computing power information.

Further optionally, in the embodiment of this application, the QoS parameter includes at least one of the following:
a first identifier;
an allocation and retention priority (Allocation and Retention Priority, ARP);
a reflective QoS attribute (Reflective QoS Attribute, RQA);
a guaranteed flow bit rate (Guaranteed Flow Bit Rate, GFBR);
a maximum flow bit rate (Maximum Flow Bit Rate, MFBR);
a notification control (Notification control) parameter;
a maximum packet loss rate (Maximum Packet Loss Rate); and
   computing power information.

The first identifier is used to identify a set of QoS parameters.

It should be noted that the first identifier is a standardized QoS identifier (for example, 5QI of 5GS). In an example, in the embodiment of this application, the standardized first identifier (for example, 5QI) may be extended. Generally, a first identifier corresponds to a set of QoS parameters, and the QoS parameters include at least one of the following: resource type, default priority level, packet delay budget, packet error rate, default maximum data burst volume, default averaging window, and computing power information.

It should be noted that when the mobile communication network provides quality of service guarantees for terminals or services, computing power information can be added, that is, computing power information can be reflected in a session management policy (for example, URSP), so that terminals can match a data tunnel according to the computing power information provided by application, or initiate a data tunnel establishment process. In addition, in order to achieve cloud-network integration, in this application, application data can be associated for the original terminal, and computing power factors are added in the QoS system.

Optionally, in this embodiment of this application, the process for the first device to generate a session management policy in step 201 may include the following content: the first device generates the session management policy based on at least one of the following:
a session policy generation request obtained by the first device,
first policy information obtained locally by the first device, and
second policy information obtained by the first device from a second device.

Exemplarily, the second device may be other network element devices, for example, a network exposure function (Network Exposure Function, NEF) entity and an application function (Application Function, AF) entity.

Further optionally, in this embodiment of this application, at least one of the session policy generation request, the first policy information, and the second policy information that are applied in the process of generating the session management policy by the first device includes: the computing power information.

It should be noted that, in the embodiment of this application, when the first device is integrated with functions of the policy management unit and the session management unit, the first device can directly make policy decisions, and can exchange policy information (that is, the determined session management policy) with terminals and other gateway devices. Alternatively, if the first device is not integrated with the function of the session management unit, the first device exchanges policy information (that is, the determined session management policy) with other gateway devices by means of the session management unit after making a policy decision.

Optionally, in the embodiment of this application, before the above step 201, the policy generation method provided in the embodiment of this application may further include the following steps:

Step 201a: The first device receives a session policy generation request from the session management unit.

Exemplarily, during the process of establishing the data tunnel, the session policy generation request is generated after the session management unit receives a data tunnel establishment request sent by the terminal; where the data tunnel establishment request includes computing power information.

Exemplarily, during the process of modifying the data tunnel, the policy generation request is used to trigger the first device to modify or update the session management policy.

Optionally, in this embodiment of this application, a process in which the first device sends the session management policy in step 202 includes the following step A1:

Step A1: The first device sends the session management policy to a target device.

The session management policy is a session management policy applied to the target device. The target device includes any one of the following: a session management unit, a data tunnel gateway, and a wireless access unit.

Exemplarily, during the process of establishing/modifying a data tunnel, when the first device generates policy information of gateway modules such as a terminal, a radio access network (Radio Access Network, RAN), and a user plane function (User Plane Function, UPF) entity, the first device considers computing power information.

It can be understood that in the embodiment of this application, the computing power information is processed at the communication transmission level, and the computing power information is transmitted to each network node on the control plane or user plane of communication transmission, so that each node of the mobile communication network can meet computing power guarantee requirements of users, so as to make cloud-network integration possible.

Optionally, in this embodiment of this application, a process in which the first device sends the session management policy in step 202 includes the following step B 1:

Step B 1: The first device sends the session management policy to the terminal.

Further, based on the above step B 1, the policy generation method provided by the embodiment of this application may further include the following step B2:

Step B2: During the process of establishing or modifying a data tunnel, the terminal receives the session management policy.

The session management policy is a session management policy applied to the terminal; and the session management policy includes computing power information.

Further optionally, in the embodiment of this application, the foregoing step B1 may specifically include: the first device sends the session management policy to the foregoing terminal through the session management unit. Correspondingly, the above step B2 may specifically include: the terminal receives the session management policy from the first device through the session management unit.

Further optionally, in the embodiment of this application, the above step B1 may include the following steps C1 to C3:

Step C1: The first device sends the session management policy to the session management unit.

Step C2: The session management unit receives the session management policy sent by the first device.

Step C3: The session management unit sends the session management policy to the terminal.

Further optionally, in the embodiment of this application, during the process of establishing the data tunnel, before the above step B2, the policy generation method provided in the embodiment of this application may further include:

Step B3: The terminal sends a data tunnel establishment request.

The data tunnel establishment request is used to generate a session management policy; and the data tunnel establishment request includes the computing power information.

Further optionally, in the embodiment of this application, the policy generation method provided in the embodiment of this application may also include the following step C4:

Step C4: During the process of establishing or modifying the data tunnel, the session management unit sends a session policy generation request to the first device.

The session policy generation request is used to generate a session management policy applied to the terminal.

In a possible example, after the above step B3, the policy generation method provided by the embodiment of this application may further include step C5: during the process of establishing a data tunnel, the session management unit receives the data tunnel establishment request sent by the terminal.

Further, before the step C4, the policy generation method provided by the embodiment of this application may also include step C6: the session management unit generates a session policy generation request based on the data tunnel establishment request, where the data tunnel establishment request includes the computing power information.

It can be understood that during the process of establishing the data tunnel, before the above step A2, the terminal can send a data tunnel establishment request to the session management unit, and the session management unit generates a session policy generation request after receiving the data tunnel establishment request, and sends the session policy generation request to the first device, so that the first device generates a session management policy based on the session policy generation request.

In another possible example, during the process of modifying the data tunnel, the policy generation request is used to trigger the first device to modify or update the session management policy.

The policy generation method provided by the embodiment of this application will be exemplarily described below by taking the first device as a policy management unit as an example.

### Embodiment 1

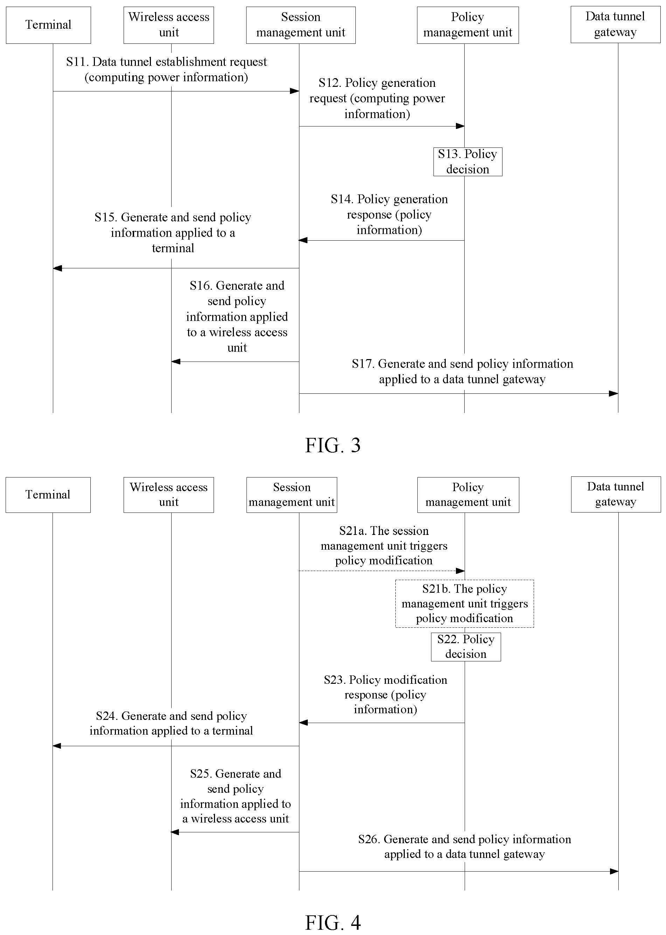

FIG. 3 shows the data tunnel establishment process. The policy generation process provided by the embodiment of this application includes the following steps:

Step S 11: When establishing a data tunnel, the terminal sends data tunnel establishment request information to the session management unit, where the data tunnel establishment request information includes computing power information.

Step S12: The session management unit sends a policy generation request to the policy management unit, where the policy generation request includes computing power information.

Step S13: The policy management unit makes a policy decision, where considered factors include the computing power information.

It should be noted that when the policy management unit formulates policies, the policy management unit needs to interact with an application server (for example, the policy management unit interacts with the application server through AF) to obtain computing power information such as a computing type, an application type, an algorithm, and the like.

Step S14: The policy management unit feeds back a policy generation response to the session management unit, where the policy generation response includes generated policy information.

Step S15: The session management unit generates and sends policy information applied to the terminal.

For example, the policy information is used for data flow binding.

Step S16: The session management unit generates and sends policy information applied to a wireless access unit.

Step S17: The session management unit generates and sends policy information applied to a data tunnel gateway.

It should be noted that the policy information is the session management policy in this specification, and the policy information includes computing power information.

It should be noted that the above step S15, step S16, and step S17 may be in no particular order.

### Embodiment 2

As shown in FIG. 4, for the process of modifying the data tunnel, the policy generation process provided by the embodiment of this application includes the following steps:

Step S21a: The session management unit triggers policy update/modification, where this process may occur during the process of modifying a data tunnel.

Step S21b: The policy management unit triggers policy update/modification, where this process may occur during the process of modifying a data tunnel.

Step S22: The policy management unit initiates a policy decision.

Step S23: The policy management unit sends a policy modification response to the session management unit, where the policy modification response includes modified policy information.

Step S24, step S25, and step S26 are the same as those described in step S15, step S16, and step S17 of Embodiment 1, and will not be repeated herein.

In the policy generation method provided by the embodiments of this application, during the process of establishing or modifying the data tunnel, the first device generates the session management policy including computing power information, and then configures the session management policy to other devices in the mobile communication network. In this way, by adding a service guarantee system related to computing power in the mobile communication network, the mobile communication network can provide better service quality guarantee for terminals or services and implement cloud-network integration.

It should be noted that, the policy generation method provided in the embodiment of this application may be performed by a policy generation apparatus, or a control module in the policy generation apparatus for executing the policy generation method. In the embodiment of this application, the policy generation method executed by the policy generation apparatus is taken as an example to describe the policy generation apparatus provided in the embodiment of this application.

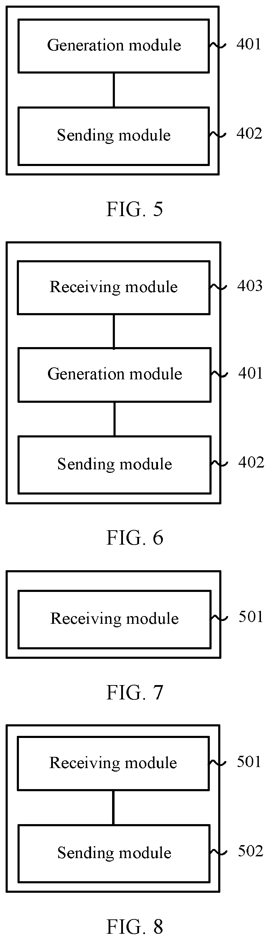

An embodiment of this application provides a policy generation apparatus. As shown in FIG. 5, the policy generation apparatus includes: a generation module 401 and a sending module 402.

The generation module 401 is configured to generate a session management policy during a process of establishing or modifying a data tunnel, where the session management policy includes computing power information. The sending module 402 is configured to send the session management policy generated by the generation module 401.

Optionally, the computing power information includes at least one of the following: data type, algorithm information, computing amount, computing amount per unit time, computing time, computing type, and peak computing amount.

Optionally, the generation module 401 is specifically configured to:
generate the session management policy based on at least one of the following:
a session policy generation request obtained by the first device,
first policy information obtained locally by the first device, and
second policy information obtained by the first device from a second device.

Optionally, at least one of the session policy generation request, the first policy information, and the second policy information that are applied in the process of generating the session management policy by the first device includes: the computing power information.

Optionally, as shown in FIG. 6, the apparatus further includes: a receiving module 403.

The receiving module 403 is configured to receive the session policy generation request from the session management unit.

Optionally, during the process of establishing the data tunnel, the session policy generation request is generated after the session management unit receives a data tunnel establishment request sent by the terminal; where the data tunnel establishment request includes computing power information.

Optionally, during the process of modifying the data tunnel, the policy generation request is used to trigger the first device to modify or update the session management policy.

Optionally, the sending module 402 is specifically configured to: send the session management policy to the terminal; where the session management policy is a session management policy applied to the terminal.

Optionally, the sending module 402 is specifically configured to: send the session management policy to the terminal through the session management unit.

Optionally, the sending module 402 is specifically configured to: send the session management policy to a target device; where the session management policy is a session management policy applied to the target device; and the target device includes any one of the following: a session management unit, a data tunnel gateway, and a wireless access unit.

Optionally, the session management policy includes a QoS parameter; where the computing power information is included in the QoS parameter.

Optionally, in a case that the session management policy includes a first identifier, a set of QoS parameters corresponding to the first identifier includes the computing power information.

Optionally, the QoS parameter includes at least one of the following: a first identifier, an ARP, an RQA, a GFBR, an MFBR, a notification control parameter, a maximum packet loss rate, and computing power information; where the first identifier is used to identify a set of QoS parameters.

In the policy generation apparatus provided by the embodiments of this application, during the process of establishing or modifying the data tunnel, the apparatus generates the session management policy including computing power information, and then configures the session management policy to other devices in the mobile communication network. In this way, by adding a service guarantee system related to computing power in the mobile communication network, the mobile communication network can provide better service quality guarantee for terminals or services and implement cloud-network integration.

An embodiment of this application provides a policy generation apparatus. As shown in FIG. 7, the policy generation apparatus includes: a receiving module 501.

The receiving module 501 is configured to receive a session management policy during the process of establishing or modifying a data tunnel.

The session management policy is a session management policy applied to the terminal; and the session management policy includes computing power information.

Optionally, as shown in FIG. 8, the apparatus further includes: a sending module 502.

The sending module 502 is configured to send a data tunnel establishment request during the process of establishing a data tunnel; where the data tunnel establishment request is used to generate the session management policy.

The data tunnel establishment request includes the computing power information.

Optionally, the receiving module 501 is specifically configured to: receive a session management policy from the first device through the session management unit.

Optionally, the computing power information includes at least one of the following: data type, algorithm information, computing amount, computing amount per unit time, computing time, computing type, and peak computing amount.

Optionally, the session management policy includes a QoS parameter; where the computing power information is included in the QoS parameter.

Optionally, in a case that the session management policy includes a first identifier, a set of QoS parameters corresponding to the first identifier includes the computing power information.

Optionally, the QoS parameter includes at least one of the following: a first identifier, an ARP, an RQA, a GFBR, an MFBR, a notification control parameter, a maximum packet loss rate, and computing power information; where the first identifier is used to identify a set of QoS parameters.

In the policy generating apparatus provided in the embodiment of this application, during the process of establishing or modifying the data tunnel, the apparatus receives the session management policy including computing power information and applied to the terminal. In this way, by adding a service guarantee system related to computing power in the mobile communication network, the mobile communication network can provide better service quality guarantee for terminals or services and implement cloud-network integration.

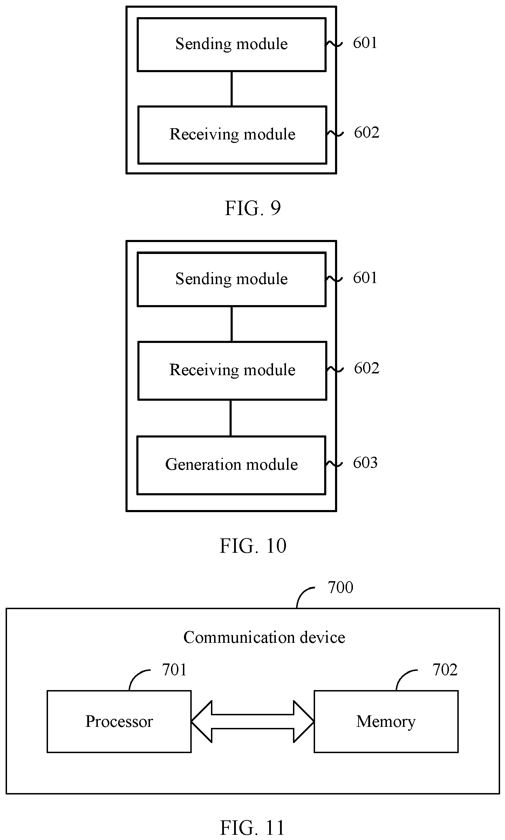

An embodiment of this application provides a policy generation apparatus. As shown in FIG. 9, the policy generation apparatus includes: a sending module 601 and a receiving module 602.

The sending module 601 is configured to send a session policy generation request to a first device during a process of establishing or modifying a data tunnel; where the session policy generation request is used to generate a session management policy applied to a terminal. The receiving module 602 is configured to receive the session management policy sent by the first device; and the sending module 601 is further configured to send the session management policy to the terminal, where the session management policy includes computing power information.

Optionally, as shown in FIG. 10, the apparatus further includes: a generation module 603.

The receiving module 602 is further configured to: during process of establishing the data tunnel, receive a data tunnel establishment request sent by the terminal. The generation module 603 is configured to generate a session policy generation request based on the data tunnel establishment request received by the receiving module 602; where the data tunnel establishment request includes the computing power information.

Optionally, during the process of modifying the data tunnel, the policy generation request is used to trigger the first device to modify or update the session management policy.

Optionally, the computing power information includes at least one of the following: data type, algorithm information, computing amount, computing amount per unit time, computing time, computing type, and peak computing amount.

Optionally, the session management policy includes a QoS parameter; where the computing power information is included in the QoS parameter.

Optionally, in a case that the session management policy includes a first identifier, a set of QoS parameters corresponding to the first identifier includes the computing power information.

Optionally, the QoS parameter includes at least one of the following: a first identifier, an ARP, an RQA, a GFBR, an MFBR, a notification control parameter, a maximum packet loss rate, and computing power information; where the first identifier is used to identify a set of QoS parameters.

In the policy generation apparatus provided in the embodiment of this application, during the process of establishing or modifying the data tunnel, the apparatus forwards the session management policy generated by the first device and including computing power information to the terminal. In this way, by adding a service guarantee system related to computing power in the mobile communication network, the mobile communication network can provide better service quality guarantee for terminals or services and implement cloud-network integration.

The policy generation apparatus in the embodiment of this application may be a device, a device with an operating system or an electronic device, or may be a component, an integrated circuit, or a chip in a terminal. The apparatus or electronic device may be a mobile terminal, or a non-mobile terminal. For example, the mobile terminal may include but is not limited to the types of the foregoing listed terminal 11, and the non-mobile terminal may be a server, a network attached storage (Network Attached Storage, NAS), a personal computer (personal computer, PC), a television (television, TV), an automated teller machine, or a self-service machine. This is not specifically limited in this embodiment of this application.

The policy generation apparatus according to embodiments of the present disclosure can implement the processes in the method embodiments in FIG. 2 to FIG. 4, and achieve the same technical effect. To avoid repetition, details are not described herein again.

Optionally, as shown in FIG. 11, the embodiment of this application further provides a communication device 700, including a processor 701, a memory 702, and programs or instructions stored in the memory 702 and executable on the processor 701. For example, when the communication device 700 is a terminal, when the program or instruction is executed by the processor 701, the relevant processes performed by the terminal in the above-mentioned method embodiments corresponding to FIG. 2 to FIG. 4 can be realized, and the same technical effect can be achieved. When the communication device 700 is the first device, when the program or instruction is executed by the processor 701, the relevant processes performed by the first device in the above-mentioned method embodiments corresponding to FIG. 2 to FIG. 4 are realized, or the relevant processes performed by the first device, the session management unit, and the policy management unit in the method embodiments corresponding to FIG. 2 to FIG. 4 are realized, and the same technical effect can be achieved. To avoid repetition, details are not repeated herein.

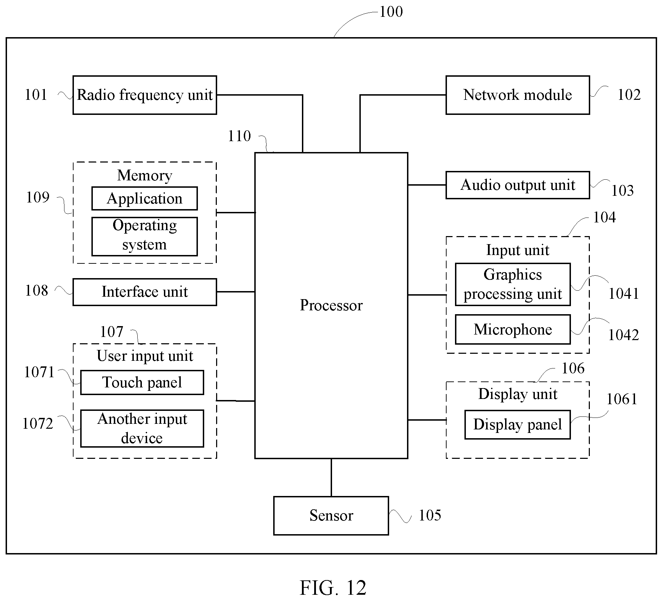

The embodiment of this application further provides a terminal, including a processor and a communication interface, and the communication interface is configured to receive a session management policy during a process of establishing or modifying a data tunnel; where the session management policy is a session management policy applied to the terminal; and the session management policy includes computing power information. This terminal embodiment corresponds to the foregoing method embodiment on the terminal side. Each implementation process and implementation of the foregoing method embodiment may be applicable to this terminal embodiment, and a same technical effect can be achieved. Specifically, FIG. 12 is a schematic diagram of a hardware structure of a terminal according to an embodiment of this application.

A terminal 100 includes but is not limited to at least a part of components such as a radio frequency unit 101, a network module 102, an audio output unit 103, an input unit 104, a sensor 105, a display unit 106, a user input unit 107, an interface unit 108, a memory 109, and a processor 110.

A person skilled in the art can understand that the terminal 100 may further include a power supply (such as a battery) that supplies power to each component. The power supply may be logically connected to the processor 110 by using a power supply management system, to implement functions such as charging and discharging management, and power consumption management by using the power supply management system. The terminal structure shown in FIG. 12 constitutes no limitation on the terminal, and the terminal may include more or fewer components than those shown in the figure, or combine some components, or have different component arrangements. Details are not described herein.

It should be understood that in this embodiment of this application, the input unit 104 may include a graphics processing unit (Graphics Processing Unit, GPU) 1041 and a microphone 1042. The graphics processing unit 1041 processes image data of a static picture or a video that is obtained by an image capture apparatus (for example, a camera) in a video capture mode or an image capture mode. The display unit 106 may include a display panel 1061. Optionally, the display panel 1061 may be configured in a form such as a liquid crystal display or an organic light-emitting diode. The user input unit 107 includes a touch panel 1071 and other input devices 1072. The touch panel 1071 is also called a touch screen. The touch panel 1071 may include two parts: a touch detection apparatus and a touch controller. The another input device 1072 may include but is not limited to a physical keyboard, a functional button (such as a volume control button or a power on/off button), a trackball, a mouse, and a joystick. Details are not described herein.

In this embodiment of this application, the radio frequency unit 101 receives downlink data from a network side device and then sends the downlink data to the processor 110 for processing; and sends uplink data to the network side device. Generally, the radio frequency unit includes but is not limited to: an antenna, at least one amplifier, a transceiver, a coupler, a low noise amplifier, a duplexer, and the like.

The memory 109 may be configured to store a software program or an instruction and various data. The memory 109 may mainly include a program or instruction storage area and a data storage area. The program or instruction storage area may store an operating system, and an application or an instruction required by at least one function (for example, a sound playing function or an image playing function). In addition, the memory 109 may include a high-speed random access memory and non-volatile memory. The nonvolatile memory may be a read-only memory (Read-only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 110 may include one or more processing units. Optionally, an application processor and a modem processor may be integrated into the processor 110. The application processor mainly processes an operating system, a user interface, an application, an instruction, or the like. The modem processor mainly processes wireless communication, for example, a baseband processor. It can be understood that, alternatively, the modem processor may not be integrated into the processor 110.

The radio frequency unit 101 is configured to receive a session management policy during a process of establishing or modifying a data tunnel; where the session management policy is a session management policy applied to the terminal; and the session management policy includes computing power information.

Optionally, the radio frequency unit 101 is configured to send a data tunnel establishment request during the process of establishing a data tunnel; where the data tunnel establishment request is used to generate the session management policy.

The data tunnel establishment request includes the computing power information.

Optionally, the radio frequency unit 101 is specifically configured to: receive a session management policy from the first device through the session management unit.

Optionally, the computing power information includes at least one of the following: data type, algorithm information, computing amount, computing amount per unit time, computing time, computing type, and peak computing amount.

Optionally, the session management policy includes a QoS parameter; where the computing power information is included in the QoS parameter.

Optionally, in a case that the session management policy includes a first identifier, a set of QoS parameters corresponding to the first identifier includes the computing power information.

Optionally, the QoS parameter includes at least one of the following: a first identifier, an ARP, an RQA, a GFBR, an MFBR, a notification control parameter, a maximum packet loss rate, and computing power information; where the first identifier is used to identify a set of QoS parameters.

In the terminal provided in the embodiment of this application, during the process of establishing or modifying the data tunnel, the terminal receives the session management policy including computing power information and applied to the terminal. In this way, by adding a service guarantee system related to computing power in the mobile communication network, the mobile communication network can provide better service quality guarantee for terminals or services and implement cloud-network integration.

The embodiment of this application further provides a first device, including a processor and a communication interface, where the processor is configured to generate a session management policy during the process of establishing or modifying a data tunnel, where the session management policy includes computing power information, and the communication interface is configured to send the session management policy generated by the processor. The first device embodiment corresponds to the above-mentioned method embodiment, that is, each implementation process and implementation mode of the first device in the above-mentioned method embodiment can be applied to the first device embodiment, and can achieve the same technical effect.

The embodiment of this application further provides a session management unit, including a processor and a communication interface, where the communication interface is configured to send a session policy generation request to a first device during a process of establishing or modifying a data tunnel; where the session policy generation request is used to generate a session management policy applied to a terminal. The communication interface is further configured to receive the session management policy sent by the first device, and send the session management policy to the terminal, where the session management policy includes computing power information. This embodiment of the session management unit corresponds to the above-mentioned method embodiment, that is, each implementation process and implementation mode of the session management unit in the above-mentioned method embodiment can be applied to this embodiment of the session management unit, and can achieve the same technical effect.

An example in which the first device or the session management unit is a network side device is used.

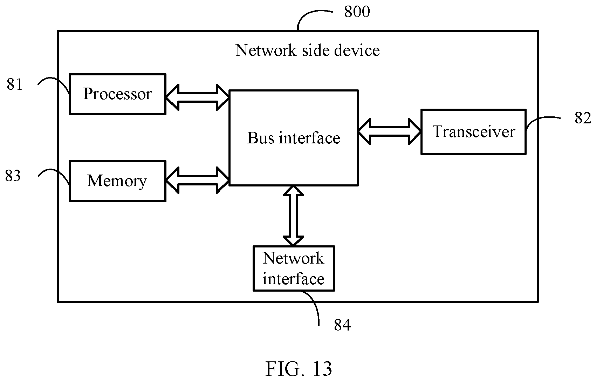

An embodiment of this application further provides a network side device. As shown in FIG. 13, the network side device in this embodiment of the present invention includes: a processor 81, a transceiver 82, a memory 83, a network interface 84, and a bus interface. In FIG. 13, a bus architecture may include any quantity of interconnected buses and bridges, and is specifically linked by various circuits of one or more processors represented by the processor 81 and a memory represented by the memory 83. The bus architecture may further link various other circuits such as a peripheral device, a voltage regulator, and a power management circuit together. These are all well-known in the art, and therefore are not further described in this specification. A bus interface provides an interface. The transceiver 82 may be multiple elements, in other words, includes a transmitter and a receiver, and provides a unit configured to communicate with various other apparatuses on a transmission medium. The processor 81 is responsible for managing the bus architecture and common processing, and the memory 83 may store data used when the processor 81 performs an operation. In addition, the network side device further includes some function modules not shown, and details are not described herein.

Specifically, the network side device further includes: an instruction or a program stored in the memory 83 and executable on the processor 81, and the processor 81 invokes the instruction or program in the memory 83 to execute the method executed by each module shown in FIG. 5, FIG. 6, FIG. 9, or FIG. 10, and achieve the same technical effect. To avoid repetition, details are not described herein again.

The embodiment of this application further provides a readable storage medium, the readable storage medium stores a program or an instruction, and when the program or instruction is executed by a processor, each process of the above method embodiment of the policy generation method is implemented, and the same technical effect can be achieved. To avoid repetition, no more details are given herein.

The processor is a processor in the terminal in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip, the chip includes a processor and a communication interface, the communication interface is coupled to the processor, and the processor is configured to run programs or instructions to implement each process of the embodiment of the foregoing policy generation method and the same technical effects can be achieved. To avoid repetition, details are not described herein again.

It should be understood that the chip mentioned in this embodiment of this application may also be referred to as a system-level chip, a system chip, a chip system, or an on-chip system chip.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be pointed out that the scope of the methods and devices in the embodiments of this application is not limited to performing functions in the order shown or discussed, and may also include performing functions in a substantially simultaneous manner or in a reverse order according to the functions involved, for example, the described methods may be performed in an order different from that described, and various steps may also be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be a mobile phone, a computer, a server, an air-conditioner, a network device, or the like) to perform the method described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A policy generation method, comprising:
during a process of establishing or modifying a data tunnel, generating, by a first device, a session management policy, wherein the session management policy comprises computing power information; and
sending, by the first device, the session management policy.

2. The method according to claim 1, wherein the computing power information comprises at least one of following:
data type, algorithm information, computing amount, computing amount per unit time, computing time, computing type, and peak computing amount.

3. The method according to claim 1, wherein the generating, by a first device, a session management policy comprises:
generating, by the first device, the session management policy based on at least one of following:
a session policy generation request obtained by the first device,
first policy information obtained locally by the first device, and
second policy information obtained by the first device from a second device.

4. The method according to claim 3, wherein at least one of the session policy generation request, the first policy information, and the second policy information that are applied in a process of generating the session management policy by the first device comprises: the computing power information.

5. The method according to claim 3, wherein before the generating, by a first device, a session management policy, the method further comprises:
receiving, by the first device, the session policy generation request from a session management unit.

6. The method according to claim 5, wherein during the process of establishing the data tunnel, the session policy generation request is generated after the session management unit receives a data tunnel establishment request sent by a terminal;
wherein the data tunnel establishment request comprises the computing power information.

7. The method according to claim 5, wherein during the process of modifying the data tunnel, the policy generation request is used to trigger the first device to modify or update the session management policy.

8. The method according to any one of claims 1 to 7, wherein the sending, by the first device, the session management policy comprises:
sending, by the first device, the session management policy to a terminal;
wherein the session management policy is a session management policy applied to the terminal.

9. The method according to claim 8, wherein the sending, by the first device, the session management policy to the terminal comprises:
sending, by the first device, the session management policy to the terminal through the session management unit.

10. The method according to any one of claims 1 to 7, wherein the sending, by the first device, the session management policy comprises:
sending, by the first device, the session management policy to a target device;
wherein the session management policy is a session management policy applied to the target device; and
the target device comprises any one of following: a session management unit, a data tunnel gateway, and a wireless access unit.

11. The method according to claim 1, wherein the session management policy comprises a quality of service QoS parameter;
wherein the QoS parameter comprises the computing power information.

12. The method according to claim 11, wherein in a case that the session management policy comprises a first identifier, a set of QoS parameters corresponding to the first identifier comprises the computing power information.

13. The method according to claim 11, wherein the QoS parameter comprises at least one of following:
a first identifier;
an allocation and retention priority ARP;
a reflective QoS attribute RQA;
a guaranteed flow bit rate GFBR;
a maximum flow bit rate MFBR;
a notification control parameter;
a maximum packet loss rate; and
computing power information;
wherein the first identifier is used to identify a set of QoS parameters.

14. A policy generation method, comprising:
during a process of establishing or modifying a data tunnel, receiving, by a terminal, a session management policy;
wherein the session management policy is a session management policy applied to the terminal; and
the session management policy comprises computing power information.

15. The method according to claim 14, wherein during the process of establishing the data tunnel, before the receiving, by a terminal, a session management policy from a first device, the method further comprises:
sending, by the terminal, a data tunnel establishment request;
wherein the data tunnel establishment request is used to generate the session management policy; and
the data tunnel establishment request comprises the computing power information.

16. The method according to claim 14, wherein the receiving, by a terminal, a session management policy comprises:
receiving, by the terminal, the session management policy from a first device through a session management unit.

17. The method according to claim 14, wherein the computing power information comprises at least one of following:
data type, algorithm information, computing amount, computing amount per unit time, computing time, computing type, and peak computing amount.

18. The method according to any one of claims 14 to 17, wherein the session management policy comprises a QoS parameter;
wherein the QoS parameter comprises the computing power information.

19. The method according to claim 18, wherein in a case that the session management policy comprises a first identifier, a set of QoS parameters corresponding to the first identifier comprises the computing power information.

20. The method according to claim 18, wherein the QoS parameter comprises at least one of following:
a first identifier;
an ARP;
an RQA;
a GFBR;
an MFBR;
a notification control parameter;
a maximum packet loss rate; and
computing power information;
wherein the first identifier is used to identify a set of QoS parameters.

21. A policy generation method, comprising:
during a process of establishing or modifying a data tunnel, sending, by a session management unit, a session policy generation request to a first device; wherein the session policy generation request is used to generate a session management policy applied to a terminal;
receiving, by the session management unit, the session management policy sent by the first device; and
sending, by the session management unit, the session management policy to the terminal, wherein the session management policy comprises computing power information.

22. The method according to claim 21, wherein during the process of establishing the data tunnel, before the sending, by a session management unit, a session policy generation request to a first device, the method further comprises:
receiving, by the session management unit, a data tunnel establishment request sent by the terminal; and
generating, by the session management unit, the session policy generation request based on the data tunnel establishment request;
wherein the data tunnel establishment request comprises the computing power information.

23. The method according to claim 21, wherein during the process of modifying the data tunnel, the policy generation request is used to trigger the first device to modify or update the session management policy.

24. The method according to claim 21, wherein the computing power information comprises at least one of following:
data type, algorithm information, computing amount, computing amount per unit time, computing time, computing type, and peak computing amount.

25. The method according to claim 21, wherein the session management policy comprises a QoS parameter;
wherein the QoS parameter comprises the computing power information.

26. The method according to claim 25, wherein in a case that the session management policy comprises a first identifier, a set of QoS parameters corresponding to the first identifier comprises the computing power information.

27. The method according to claim 25, wherein the QoS parameter comprises at least one of following:
a first identifier;
an ARP;
an RQA;
a GFBR;
an MFBR;
a notification control parameter;
a maximum packet loss rate; and
computing power information;
wherein the first identifier is used to identify a set of QoS parameters.

28. A policy generation apparatus, comprising:
a generation module, configured to: during a process of establishing or modifying a data tunnel, generate a session management policy, wherein the session management policy comprises computing power information; and
a sending module, configured to send the session management policy generated by the generation module.

29. The apparatus according to claim 28, wherein the computing power information comprises at least one of following:
data type, algorithm information, computing amount, computing amount per unit time, computing time, computing type, and peak computing amount.

30. The apparatus according to claim 28, wherein the generation module is specifically configured to:
generate the session management policy based on at least one of following:
a session policy generation request obtained by a first device,
first policy information obtained locally by the first device, and
second policy information obtained by the first device from a second device.

31. The apparatus according to claim 30, wherein at least one of the session policy generation request, the first policy information, and the second policy information that are applied in a process of generating the session management policy by the first device comprises:
the computing power information.

32. The apparatus according to claim 30, wherein the apparatus further comprises:
a receiving module, configured to receive the session policy generation request from a session management unit.

33. The apparatus according to claim 32, wherein during the process of establishing the data tunnel, the session policy generation request is generated after the session management unit receives a data tunnel establishment request sent by a terminal;
wherein the data tunnel establishment request comprises the computing power information.

34. The apparatus according to claim 32, wherein during the process of modifying the data tunnel, the policy generation request is used to trigger the first device to modify or update the session management policy.

35. The apparatus according to any one of claims 28 to 34, wherein the sending module is specifically configured to: send the session management policy to a terminal;
wherein the session management policy is a session management policy applied to the terminal.

36. The apparatus according to claim 35, wherein the sending module is specifically configured to:
send the session management policy to the terminal through the session management unit.

37. The apparatus according to any one of claims 28 to 34, wherein the sending module is specifically configured to: send the session management policy to a target device;
wherein the session management policy is a session management policy applied to the target device; and
the target device comprises any one of following: a session management unit, a data tunnel gateway, and a wireless access unit.

38. The apparatus according to claim 28, wherein the session management policy comprises a QoS parameter;
wherein the QoS parameter comprises the computing power information.

39. The apparatus according to claim 38, wherein in a case that the session management policy comprises a first identifier, a set of QoS parameters corresponding to the first identifier comprises the computing power information.

40. The apparatus according to claim 38, wherein the QoS parameter comprises at least one of following:
a first identifier;
an ARP;
an RQA;
a GFBR;
an MFBR;
a notification control parameter;
a maximum packet loss rate; and
computing power information;
wherein the first identifier is used to identify a set of QoS parameters.

41. A policy generation apparatus, comprising:
a receiving module, configured to receive a session management policy during a process of establishing or modifying a data tunnel;
wherein the session management policy is a session management policy applied to a terminal; and
the session management policy comprises computing power information.

42. A policy generation apparatus, comprising:
a sending module, configured to send a session policy generation request to a first device during a process of establishing or modifying a data tunnel; wherein the session policy generation request is used to generate a session management policy applied to a terminal; and
a receiving module, configured to receive the session management policy sent by the first device; and
the sending module is further configured to send the session management policy to the terminal, wherein the session management policy comprises computing power information.

43. A first device, comprising a processor, a memory, and a program or an instruction stored in the memory and executable on the processor, wherein when the program or the instruction is executed by the processor, steps of the policy generation method according to any one of claims 1 to 13 are implemented.

44. A terminal, comprising a processor, a memory, and a program or an instruction stored in the memory and executable on the processor, wherein when the program or the instruction is executed by the processor, steps of the policy generation method according to any one of claims 14 to 20 are implemented.

45. A session management unit, comprising a processor, a memory, and a program or an instruction stored in the memory and executable on the processor, wherein when the program or the instruction is executed by the processor, steps of the policy generation method according to any one of claims 21 to 27 are implemented.

46. A readable storage medium, storing a program or an instruction, wherein when the program or the instruction is executed by a processor, steps of the policy generation method according to any one of claims 1 to 13, or steps of the policy generation method according to any one of claims 14 to 20, or steps of the policy generation method according to any one of claims 21 to 27 are performed.

47. A policy generation apparatus, configured to execute steps of the policy generation method according to any one of claims 1 to 13, or steps of the policy generation method according to any one of claims 14 to 20, or steps of the policy generating method according to any one of claims 21 to 27.

48. A first device, configured to execute steps of the policy generating method according to any one of claims 1 to 13.

49. A terminal, configured to execute steps of the policy generation method according to any one of claims 14 to 20.

50. A network side device, configured to execute steps of the policy generation method according to any one of claims 21 to 27.

51. A chip, wherein the chip comprises a processor and a communication interface, the communication interface is coupled to the processor, and the processor is configured to run programs or instructions, to perform steps in the policy generation method according to any one of claims 1 to 13, or steps in the policy generation method according to any one of claims 14 to 20, or steps in the policy generation method according to any one of claims 21 to 27.
